(19) Europäisches Patentamt
European Patent Office
Office européen des brevets

(11) Publication number: **0 220 198 B1**

(12) **EUROPEAN PATENT SPECIFICATION**

(45) Date of publication of patent specification: **13.11.91**

(51) Int. Cl.$^5$: **C01B 31/30**, C01B 21/06, C01B 35/04, C01B 33/06, C01B 25/08, C22C 1/00, C21B 15/00, C22B 5/20, C22B 11/02, C22B 15/00

(21) Application number: **86900922.5**

(22) Date of filing: **16.01.86**

(86) International application number: **PCT/US86/00058**

(87) International publication number: **WO 86/06361 (06.11.86 86/24)**

(54) **PREPARING METAL COMPOUNDS BY PYROLYSIS.**

(30) Priority: **26.04.85 US 727524**

(43) Date of publication of application: **06.05.87 Bulletin 87/19**

(45) Publication of the grant of the patent: **13.11.91 Bulletin 91/46**

(84) Designated Contracting States: **BE FR IT**

(56) References cited:
**FR-A- 1 306 788**
**FR-A- 1 359 694**
**US-A- 3 064 021**
**FR-A- 1 329 628**
**US-A- 2 922 819**
**US-A- 3 070 615**

**JOURNAL OF THE ELECTROCHEMICAL SOCIETY, vol. 122, no. 11, Nov 1975, Princeton, NJ (US); K.SUGIYAMA et al.: "Low temperature deposition of metal nitrides by thermal decomposition of organometallic compounds", pp 1545-1549**

(73) Proprietor: **SRI INTERNATIONAL**
**333 Ravenswood Avenue**
**Menlo Park, California 94025(US)**

(72) Inventor: **LAINE, Richard, M.**
**3866 Corina Court**
**Palo Alto, CA 94303(US)**

(74) Representative: **Rinuy, Santarelli**
**14, avenue de la Grande Armée**
**F-75017 Paris(FR)**

EP 0 220 198 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

JOURNAL OF THE CHEMICAL SOCIETY, Dalton Transactions, no. 20, 1977, Letchworth (GB); B.J.AYLETT et al.: "Chemical vapor deposition of transition metal silicides by pyrolysis of silyl transition-metal carbonyl compounds", pp 2058-2062

CHEMICAL ABSTRACTS, vol. 74, no. 16, 19 April 1971, Columbus, OH (US); B.G.GRIBOV et al., p. 161, no. 78827x

CHEMICAL ABSTRACTS, vol. 97, no. 12, 29 Sep 1982, Columbus, OH (US); L.M.YASSEN et al., p. 148, no. 94774h

## Description

This invention relates to the preparation of metal carbides, nitrides, silicides, borides and phosphides and to other metallic products.

By way of example of methods used in the prior art, tungsten metal in finely divided form is mixed with carbon black and the mixture is heated typically to a temperature of about 1700° to 2300°C. This results in tungsten carbide which is usually mixed with a binder metal such as cobalt and is then subjected typically to shaping into the desired shape, presintering, shaping and sintering.

Other hard metal powders are produced in similar fashion except that carburization is done at the metal oxide stage rather than with the metal itself.

Such methods pose difficulties such as the need for very high temperatures. Further difficulties are also encountered. If it is desired, for example, to apply the carbide as a coating, it has to be done by chemical vapor deposition or physical vapor deposition which is limited to line of sight procedures.

It is an object of the present invention to provide better methods of producing metal carbides, nitrides, silicides, borides, phosphides, etc., such methods providing one or more of the following advantages:

(1) Lower temperatures in the preparation of the metal compound $M_aX_b$ wherein M represents the metal or metals, X represents the combining element or elements and the subscripts a and b represent the atomic proportions of M and X.

(2) A simplified procedure.

(3) Greater control over the combining proportions, a and b.

(4) More facile methods of application of $M_aX_b$ to end products.

(5) Potential routes to materials or material morphologies that have heretofore been impossible or difficult to prepare.

These and other objects of the invention will be apparent from the ensuing description and the appended claims.

I have found that organometallic complexes of the selected metal (hereinafter called precursors) can be prepared which are soluble in common organic solvents or can be melted at relatively low temperatures. Solutions can be applied to the surface of a substrate, heated to vaporize the solvent and then pyrolyzed on the surface. The pyrolysis can be carried out at relatively low temperatures to provide the substance $M_aX_b$. Yet the precursors are not so volatile that they cannot be pyrolyzed.

The organometallic precursor contains the metal M associated with the element X and with ligands. The element X may be bonded directly to M or it may be contained in one or more of the ligands, such that upon pyrolysis the ligands are lost with the exception of X which is bound to, or which becomes bound to the metal M. Preferably the ligands are free of halogen or oxygen directly bonded to the metal M. When possible, the precursor is designed such that there are multiple bonds between M and X to increase the likelihood that these two elements will retain a bonding interaction during pyrolysis. M represents a single metal or two or more different metals and X represents one or more elements.

The ligands endow the precursor with solubility in organic solvents or provide a material which is solid and meltable. Therefore solutions or melts of the precursors can, for example, be applied to a surface by dipping or brushing. Polymeric precursors may result directly from the method of preparation. The precursors can be pyrolyzed at relatively low temperatures. The method of application as coatings is not limited to line of sight.

The use of precursors of the present invention to produce alloys is useful where the alloy has a high melting point and is to be deposited on a substrate which is low melting or which would be damaged by contact with the molten alloy.

Examples of M and X pairs are set forth in Table I. X may be carbon, nitrogen, silicon, boron or phosphorus. M is a transition metal, a lanthanide metal, an actinide metal or tin. It will be understood that M may be more than one metal and that X is be one or more of the elements C, N, B, Si or P.

TABLE I

| M | X | M | X |
|---|---|---|---|
| Ti | C | Fe | N |
| W | C | Hf | N |
| Hf | C | Ta | N |
| Fe | C | Ti | B |
| Cr | C | Fe | B |
| Ta | C | Fe | Si |
| Cr | C | Pd | Si |
| V | C | Ru | Si |
| Nb | C | Rh | Si |
| Ti | N | Co | P |
| W | N | Fe | P |

Examples of suitable solvents for the precursors are $CH_2Cl_2$, $CHCl_3$, $CO_2$, $SO_2$, sulfolane, MeOH, EtOH, $Et_2O$, glyme, diglyme, THF, freon, benzene, toluene, DMSO, DMF, N-methylpyrolidone, hexane, and pentane.

The following specific examples will serve to illustrate the practice and advantages of the invention.

Example 1. Preparation of Tungsten Carbide and Oxycarbide

Compound 1

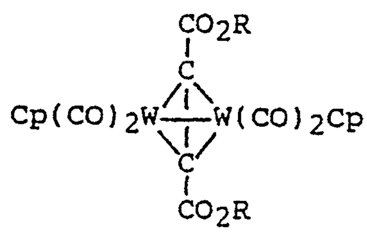

1

is prepared as described by Ford and Laine in Journal of Organometallic Chemistry, Vol. 124, p. 29 (1977). Cp represents the cyclopentadienyl group. Precursor 1 is placed in a quartz or nickel boat and is pyrolyzed in an atmosphere of nitrogen or argon at 500° to 950°C for 10 to 30 minutes. Conversion to $W_2C$ resulted where the boat was of nickel and where it was of quartz the product was tungsten oxycarbide, $W_2(C,O)$. In both cases the yield was about 95 per cent. The difference in results between nickel and quartz containers is believed to be due to the fact that quartz supplies oxygen to form oxycarbide. It is believed that this could be prevented by coating the quartz container with tungsten.

Figure 1 of the drawings shows the X-ray powder diffraction pattern of the product of pyrolysis in a nickel boat.

The tungsten oxycarbide is useful to coat alloys and as electrode material in electrochemical reactions.

The tungsten carbide, $W_2C$, is useful for hard, corrosion and wear resistant surfaces and can be used on cutting edges for machining tools.

The compound 1 is soluble in common organic solvents such as methanol, methylenedichloride, diethylether, etc. In solution form it can be applied to a substrate, for example, by brushing or dipping. Upon heating the solvent is evaporated and the compound 1 can be pyrolyzed to form a carbide or oxycarbide.

Compound 1 may also be used as such without dissolving it in a solvent.

Example 2. Preparation of Titanium Diboride

The organometallic precursor, $Cp_2Ti(BH_4)_2$,was prepared by the method described by A. S. Lee, K. Isagawa, and Y. Otsuji, Chem. Lett. 1984, 363-366 by reaction of $Cp_2TiCl_2$ with excess $NaBH_4$ in THF. The resulting purple complex (purified by filtration and vacuum removal of solvent) is very air sensitive. The solid material is transferred to both nickel and quartz pyrolysis tubes in a dry-box and under argon and into a pyrolysis oven. After heating at 850° for 20 min., X-ray powder analysis shows $TiB_2$ and Tic present in 20 and 30% amounts, respectively. Very small particle sizes are obtained, less than 30 Angstrom units.

Example 3. Preparation of Ruthenium Silicide

Method 1 (Precursor 2). To 8.9 mmol of octamethyltetrasilane are added 0.3 mmol of $Ru_3(CO)_{12}$ and the solution is heated at 135°C in one atmosphere of hydrogen for 3 hours. A deep orange insoluble material precipitates and is washed with petroleum ether. The yield is 0.4 gram. The material is insoluble in methylene chloride but is soluble in THF and methanol. It is very hygroscopic in air. Infrared analysis of the solution in THF shows peaks at 2060 (w), 2042 (w), 2038 (sh), 2023 (w), 2004 (m), 1978 (vs)cm$^{-1}$. The product is believed to have the formula

$$(NHSiMe_2)_3NHRu_3(CO)_{11}SiMe_2$$

2

Method 2 (Precursor 3). To 7.5 mmol of tetramethyldisilazane is added 0.08 mmol of $Ru_3(CO)_{12}$ and the solution is heated at 135° under 1 atmosphere of hydrogen for about 1 hour. The $Ru_3(CO)_{12}$ disappears completely. The solution is evaporated. An oily orange residue remains in the flask. IR analysis ($CH_2Cl_2$) of the metal carbonyl gives: 2121 (w), 2101 (s), 2028 (vs) 2010 (vs), 1953 (sh)cm$^{-1}$. The formula of 3 is believed to be

$$SiMe_2Ru_3(CO)_{11}SiMe_2NH$$

3

Method 3 (Precursor 4). This precursor, $[(C_2H_5)_3Si]_2Ru_3(CO)_{10}$, is prepared by the method of Georg Suss-Fink described in his Habilitionsschrift entitled "Stochiometrische und Katalytische Aktivierungsreaktionen an dreikernegen Klustern des Osmiums und Rutheniums", University of Bayreuth, 1983.

Pyrolysis of each of 2, 3 and 4 at 800°C for 2 hours yielded ruthenium silicide, RuSi. Figure 2 of the drawings represents the X-ray powder diffraction pattern of this product.

Example 4. Preparation of Metal Nitrides and Phosphides

Metal nitride and metal phosphide precursors may be those described by Williams, Geoffrey and Whittle in J. Am. Chem. Soc. Vol. 107, pages 729-731 (1985), for example the nitrene compounds 5a and 5b described in Scheme 1 on page 729 or the phosphinidene analogue in which the nitrogen is replaced by phosphorus. Upon pyrolyzing at 800°C for 2 hours an iron nitride or phosphide will result. By substituting

other metals for iron the corresponding nitrides and phosphides will result.

Among suitable precursors are the following which are described in the literature.

TABLE II, Carbide Precursors

| Precursor | Literature Reference |
|---|---|
| $Fe_5(CO)_{15}C$ | Adv. Organometallic Chem. (1976) 14, 285, 288-289 |
| $[Fe_6(CO)_{16}C]^{2-}$ | " |
| $[Co_8(CO)_{18}C]^{2-}$ | " |
| $Ru_6(CO)_{17}C$ | " |
| $Ru_6(CO)_{14}(C_9H_{12})C$ | " |
| $[Rh_6(CO)_{15}C]^{2-}$ | " |
| $Rh_8(CO)_{19}C$ | " |
| $Rh_{12}(CO)_{25}(C_2)$ | " |
| $[Rh_{15}(CO)_{28}(C)_2]^-$ | " |
| $Ru_5C(CO)_{15}$ | " |
| $Os_5C(CO)_{15}$ | J. Organometallic Chem. (197 57, C82-C83 |
| $Co_2(CO)_6(RC{=}CR)$ (R = alkyl, aryl) | Ibid (1983) 259, 253 |
| $Ru_6C(CO)_{16}C_6H_2(CH_3)_3$ | Adv. Organomet. Chem. (1976) 14, 285 |
| $Ru_6C(CO)_{17}$ | " |
| $Cp_2VC{\equiv}C{-}C(CH_3)_3$ | J. Organometallic Chem. (198 265, 249-255 |
| Alkylidynetricobalt-nonacarbonyl complexes | J. Organometallic Chem. (197 162, 89-98 |
| $Cp_2W_2Ir_2(CO)_6(\mu_3{-}CPh)(\mu_3{-}\eta^3{-}C_3Ph)$ | Organometallics (1984) 3, 158 |
| 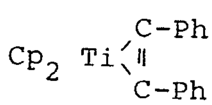 | J. Organometallic (1983) 243, 157 |

## Nitride Precursors

| | |
|---|---|
| $H_2Ru_3(CO)_9NH$ | J. Chem. Soc. Chem. Commun. (1984) 186 |
| $[FeRu_3N(CO)_{12}]^-$ | JACS (1984) 106, 4799 |
| $[NOs(CH_2SiMe_3)_4]^-$ | JACS (1984) 106, 7493 |
| $[W(NPh)Me_3]_2(\mu-\eta^1,\eta^1-NH_2NH_2)(\mu-\eta^2,\eta^2NHNH)$ | JACS (1984) 106, 8316 |

## Boride Precursors

| | |
|---|---|
| $(H)Fe_3(CO)_9(\mu_3-BH_4)$ | JACS (1984), 106 4633 |
| $HFe_4(CO)_{12}BH_2$ | Organometallics (1983) 2, 825 |
| $(C_4H_4B-Ph)Ru(CO)_3$ | Angew. Chem. Int. Ed. (1983) 22, 996 |
| $V(C_5H_5B-CH_3)_2$ | J. Organomet. (1984) 265, 225 |

The precursor may be in the form of a polymer. Examples of such polymers and their preparation are as follows.

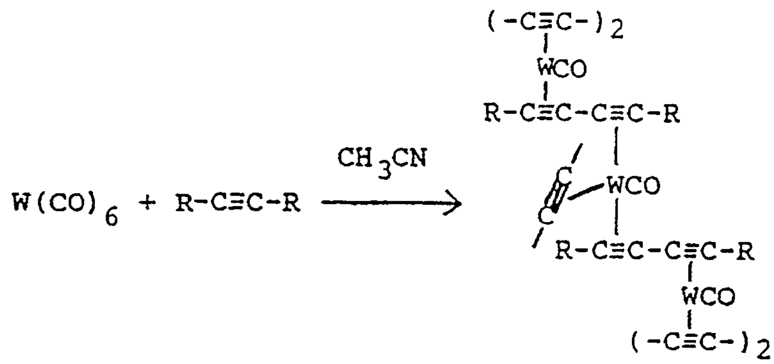


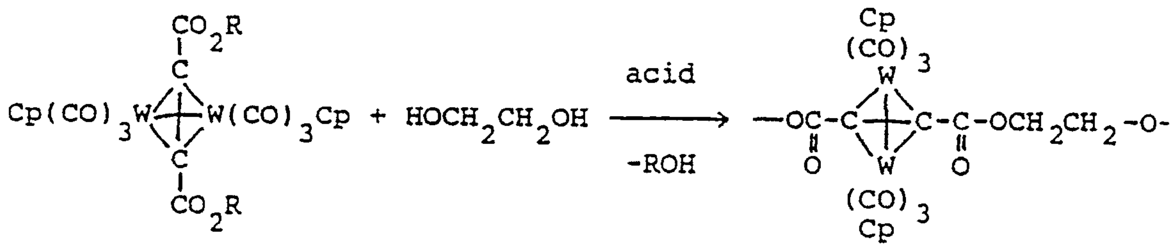


It will therefore be apparent that new and useful methods of producing metal carbides, nitrides, borides, silicides and phosphides have been provided. Also new and useful precursors for the same and new methods and materials have been provided for applying metal carbides, etc. to solid substrates.

## Claims

**1.** A method of producing a coating of $M_aX_b$ wherein M represents one or more metals selected from the group consisting of transition metals, lanthanide metals, actinide metals and tin, X represents one or more elements selected from the group consisting of C, N, B, Si and P, and a and b represent the atomic proportions of M and X, characterized in that it comprises the steps of, in sequence:
(a) providing a precursor to $M_a$ $X_b$ that is non-volatile upon pyrolysis and which comprises an organo-metallic complex, said complex including one or more metal atoms which may be the same or different, said organometallic complex further containing the element X either directly bound to one or more of said metal atoms M or contained within said ligands or both;
(b) optionally either:
(i) dissolving said precursor in an organic solvent to give a precursor solution, or
(ii) melting said precursor;
(c) coating a substrate with said dissolved or melted precursor, and
(d) pyrolyzing said coated substrate at a relatively low temperature in the range 500°c to 950°C, to give a coating of $M_aX_b$ substantially free of unbound element X.

**2.** The method of claim 1 wherein X is carbon and the surface coating is a carbide.

**3.** The method of claim 1 wherein X is nitrogen and the surface coating is a nitride.

**4.** The method of claim 1 wherein X is boron and the surface coating is a boride.

**5.** The method of claim 1 wherein X is silicon and the surface coating is a silicide.

**6.** The method of claim 1 wherein X is phosphorous and the surface coating is a phosphide.

**Revendications**

1. Procédé de production d'un revêtement de $M_aX_b$, dans lequel M représente un ou plusieurs métaux choisis dans le groupe comprenant des métaux de transition, des lanthanides, des actinides et l'étain, X représente un ou plusieurs éléments choisis dans le groupe comprenant C, N, B, Si et P, et a et b représentent les proportions atomiques de M et X, caractérisé en ce qu'il comprend les étapes consistant, successivement :
   (a) à produire un précurseur de $M_aX_b$, qui est non volatil par pyrolyse et qui consiste en un complexe organométallique, ledit complexe comprenant un ou plusieurs atomes métalliques qui peuvent être identiques ou différents, ledit complexe organométallique contenant en outre l'élément X lié directement à un ou plusieurs desdits atomes métalliques M ou présent à l'intérieur des ligands, ou bien sous l'une et l'autre formes ;
   (b) facultativement :
      (i) à dissoudre ledit précurseur dans un solvant organique pour obtenir une solution de précurseur, ou bien
      (ii) à provoquer la fusion dudit précurseur ;
   (c) à revêtir un substrat avec ledit précurseur dissous ou fondu, et
   (d) à pyrolyser ledit substrat revêtu à une température relativement basse, comprise dans l'intervalle de 500 °C à 950 °C, pour obtenir un revêtement de formule $M_aX_b$ pratiquement dépourvu d'élément X non lié.

2. Procédé suivant la revendication 1, dans lequel X représente le carbone et le revêtement de surface consiste en un carbure.

3. Procédé suivant la revendication 1, dans lequel X représente l'azote et le revêtement de surface consiste en un nitrure.

4. Procédé suivant la revendication 1, dans lequel X représente le bore et le revêtement de surface consiste en un borure.

5. Procédé suivant la revendication 1, dans lequel X représente le silicium et le revêtement de surface consiste en un siliciure.

6. Procédé suivant la revendication 1, dans lequel X représente le phosphore et le revêtement de surface consiste en un phosphure.

## Patentansprüche

1. Verfahren zur Herstellung eines Überzugs von $M_aX_b$, worin M eines oder mehrere aus der Gruppe von Übergangsmetallen, Lanthanidmetallen, Aktinidmetallen und Zinn ausgewählte Metalle bedeutet, X eines oder mehrere aus der Gruppe von C, N, B, Si und P ausgewählte Elemente bedeutet, und a und b die Atomanteile von M und X bezeichnen, **dadurch gekennzeichnet,** daß es die Abfolge folgender Schritte umfaßt:
   (a) Bereitstellung eines Vorläufers für $M_aX_b$, der bei Pyrolyse nicht-flüchtig ist und der einen metallorganischen Komplex umfaßt, der ein oder mehrere Metallatome beinhaltet, die gleich oder verschieden voneinander sein können, und der ferner das Element X enthält, das entweder direkt an ein oder mehrere der Metallatome M gebunden oder in den Liganden enthalten oder beides ist;
   (b) gegebenenfalls entweder
      (I) Lösung des Vorläufers in einem organischen Lösungsmittel zur Ausbildung einer Vorläuferlösung, oder
      (II) Schmelzen des Vorläufers;
   (c) Beschichtung eines Substrates mit dem gelösten oder geschmolzenen Vorläufer, und
   (d) Pyrolysierung des beschichteten Substrates bei einer relativ niedrigen Temperatur im Bereich von 500 °C bis 950 °C zur Ausbildung eines Überzugs von $M_aX_b$, der im wesentlichen frei von ungebundenem Element X ist.

2. Verfahren nach Anspruch 1, worin X Kohlenstoff und der Oberflächenüberzug ein Karbid ist.

3. Verfahren nach Anspruch 1, worin X Stickstoff und der Oberflächenüberzug ein Nitrid ist.

**4.** Verfahren nach Anspruch 1, worin X Bor und der Oberflächenüberzug ein Borid ist.

**5.** Verfahren nach Anspruch 1, worin X Siliciumdioxid und der Oberflächenüberzug ein Silicid ist.

**6.** Verfahren nach Anspruch 1, worin X Phosphor und der Oberflächenüberzug ein Phosphid ist.

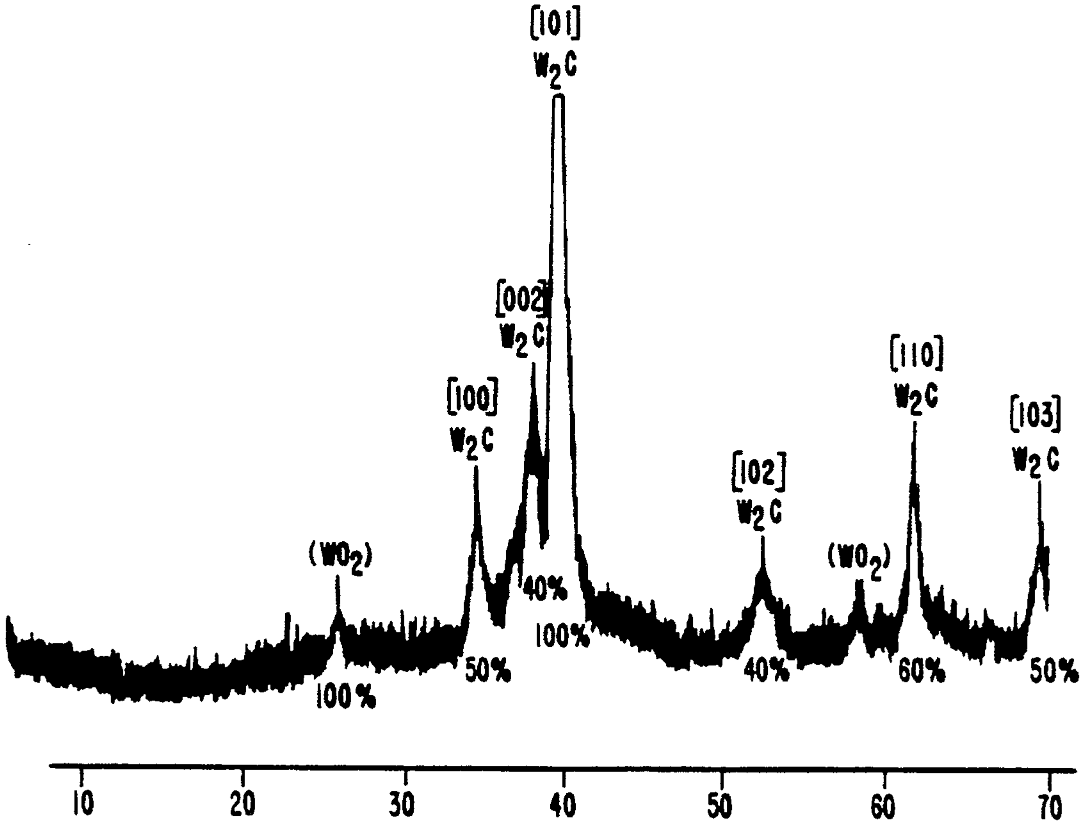


X-RAY POWDER DIFFRACTION PATTERN
OF $Cp_2W_2(CO)_4$ DMAD PYROLYZED AT
750° C FOR 20 MINUTES IN A NICKEL TUBE

FIG. 1

FIG. 2

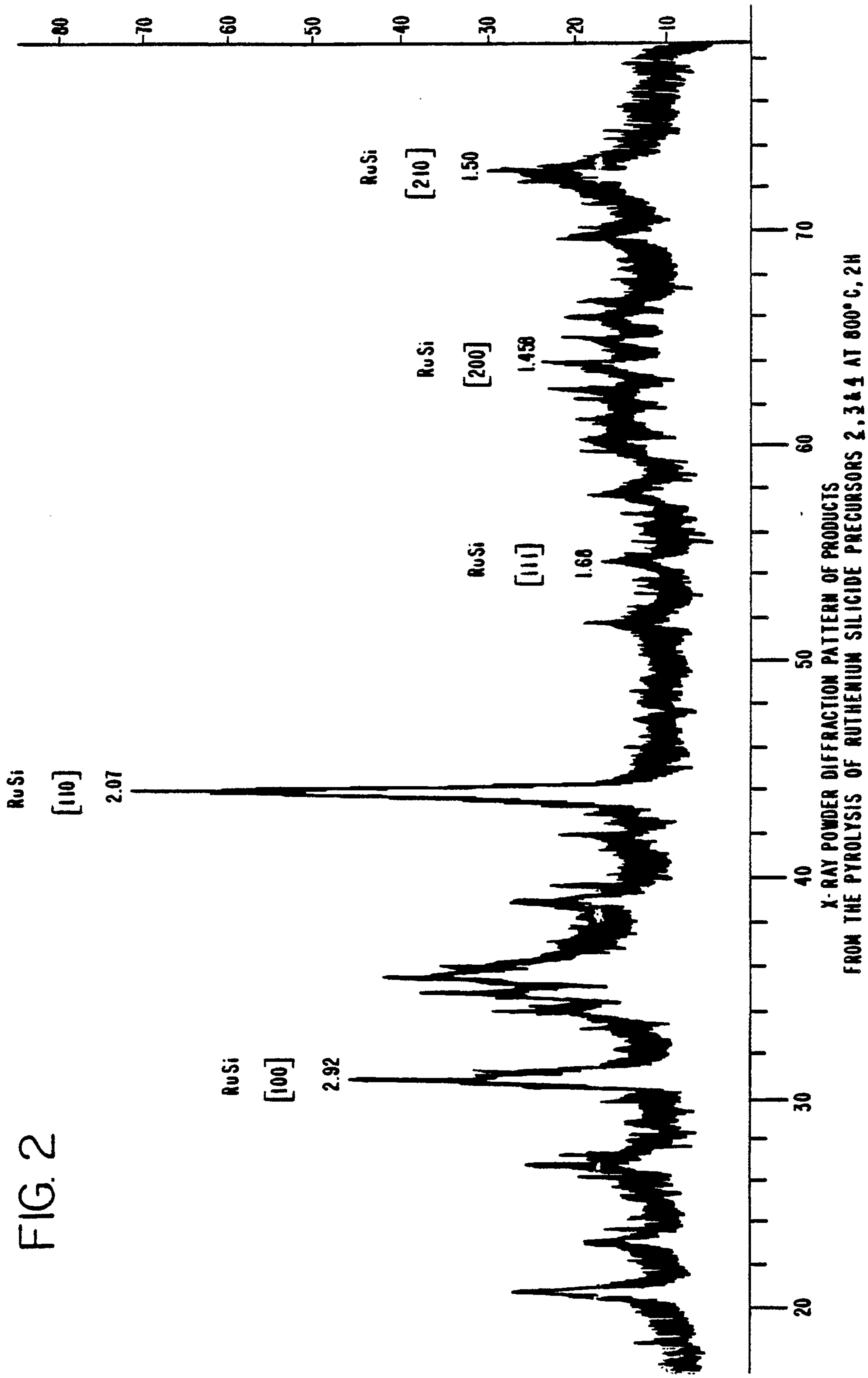


X-RAY POWDER DIFFRACTION PATTERN OF PRODUCTS FROM THE PYROLYSIS OF RUTHENIUM SILICIDE PRECURSORS 2,3&4 AT 800°C, 2H